# EUROPÄISCHE PATENTSCHRIFT

(11) **EP 2 525 098 B1**
(45) Veröffentlichungstag und Bekanntmachung des Hinweises auf die Patenterteilung: **17.07.2013**
(21) Anmeldenummer: 11166888.5
(22) Anmeldetag: 20.05.2011
(51) Int. Cl.: F04C 13/00, A22C 11/08

(54) **Vakuumregelung in einem Vakuumfüller ohne Zuführung von Fremdluft**
Vacuum control in a vacuum filler without feed of outside air
Réglage du sous vide dans un remplisseur à sous vide sans entrée d'air extérieur

(43) Veröffentlichungstag der Anmeldung: 21.11.2012
(73) Patentinhaber: Albert Handtmann Maschinenfabrik GmbH & Co. KG, 88400 Biberach (DE)
(72) Erfinder: Staudenrausch, Martin, 88400, Biberach (DE)
(74) Vertreter: Grünecker, Kinkeldey, Stockmair & Schwanhäusser

(56) Entgegenhaltungen:
- DE-A1- 19 914 499
- US-A1- 2007 212 994
- US-B1- 6 309 293

## Beschreibung

Die Erfindung betrifft ein Förderwerk, ein Verfahren zum Fördern von pastöser Masse sowie eine Füllmaschine gemäß den Oberbegriffen der Ansprüche 1, 9 und 14.

Förderwerke, insbesondere Flügelzellenpumpen, werden bereits zum Fördern von Wurstbrät aus Trichtern in Füllrohre, über die Wursthüllen mit dem Wurstbrät gefüllt werden, eingesetzt. Solche Flügelzellenpumpen sind beispielsweise in der EP 0432388 B2 und in der EP 1040758 A1 beschrieben. Flügelzellenpumpen bestehen aus einem Pumpengehäuse und einem darin exzentrisch angeordneten, in Drehung versetzbaren Rotor. In dem Rotor sind radial verschiebbar gelagerte Flügel angeordnet, die mit der Wandung des Pumpengehäuses, dem Boden und dem Deckel des Gehäuses und der Außenfläche des Rotors Förderzellen bilden. Das Pumpengehäuse weist einen Bräteinlass und einen Brätauslass auf. Vom Auslass aus kann das Brät beispielsweise in ein Füllrohr geschoben werden.

Das Dokument US 6 309 293 beschreibt ein Förderwerk für eine Füllmaschine zum Fördern von pastöser Masse, mit einem Gehäuse mit einer Vakuumöffnung und mit einer Vakuumpumpe sowie einer Saugleitung zum Erzeugen eines Unterdrucks in dem Förderwerk wobei eine Ventileinrichtung in der Saugleitung vorgesehen ist, und wobei eine Regeleinrichtung zum Regeln des Unterdrucks in dem Förderwerk vorgesehen ist wobei über die Ventileinrichtung der Querschnitt der Saugleitung einstellbar ist.

Beim Abfüllen von pastösen Massen mit einem Vakuumfüller wird mit Hilfe einer Vakuumpumpe im Förderwerk ein Unterdruck erzeugt. Dieser Unterdruck entzieht der abzufüllenden Masse deren Gas-/Luftgehalt teilweise oder weitgehend vollständig. Dies ist in der Regel auch erwünscht. Das Endprodukt wird dadurch kompakt und porenfrei.

Es gibt aber auch Endprodukte, die den Luftanteil ganz oder zu einem Teil behalten sollen. Um dies zu erreichen, wird die Höhe des Vakuums im Förderwerk abgesenkt. Der abzufüllenden Masse wird dadurch keine oder nur ein Teil des Luftanteils entzogen. Das Produkt behält seine Ausgangskonsistenz und wird in diesem Fall nicht unerwünscht verdichtet. Beispiele für Endprodukte, deren Gasanteil nicht oder nur teilweise entzogen werden soll oder die nicht verdichtet werden sollen, sind: Fleischkäse, Weißwürste, Kaviar, alle Massen, die cremig bleiben sollen sowie körnige Produkte.

Bislang wird die Vakuumpumpe im Nennlastbereich betrieben. Um die Höhe des Vakuums zu reduzieren und dem Endprodukt anzupassen, wird eine bestimmte Menge Fremdluft mit einem manuellen oder elektrisch betriebenen Ventil dem Vakuumsystem zugeführt. Dadurch wird die Druckdifferenz zwischen dem Vakuumsystem und dem Luftanteil des Füllmediums reduziert, so dass der Gasanteil im zu füllenden Medium ganz oder teilweise erhalten bleibt. Körnige Produkte werden weniger verdichtet, je niedriger das angesetzte Vakuum ist.

Jede Verdrängerpumpe, hier das Förderwerk der Vakuumfüllmaschine, hat eine Saugseite und eine Druckseite. Auf der Saugseite entsteht, je nach Dichtigkeit der Pumpe, durch die Vergrößerung der Förderwerkskammern, ein mehr oder weniger hohes Vakuum. Üblicherweise wird auf dieser Seite des Förderwerks zusätzlich mittels der Vakuumpumpe, wie zuvor beschrieben, die Bildung eines möglichst konstanten Vakuums unterstützt. Soll nun die Höhe dieses erzeugten Vakuums, wie zuvor erläutert, reduziert werden, z.B. durch das gesteuerte Zuführen von Fremdluft, so kann der Druck auf der Saugseite des Förderwerks niedriger sein als der Druck im Vakuumsystem. Dadurch wird Fremdluft bzw. von außen zugeführte Frischluft aus dem Vakuumsystem in das Förderwerk gesaugt.

Dabei haben sich folgende Probleme ergeben. Das Füllmedium kann durch Bakterien kontaminiert werden. Die Befüllung der Förderwerkskammern ist nicht gleichmäßig, was unweigerlich zu erhöhten Gewichtsschwankungen der ausgestoßenen Portionen führt. Die Vakuumpumpe muss unnötig viel Luft absaugen, was bei manchen Vakuumpumpenarten zu technischen Problemen führt. Die Vakuumpumpe wird mit unnötig hoher Leistung betrieben und damit Energie verschwendet.

Hiervon ausgehend liegt der vorliegenden Erfindung die Aufgabe zugrunde, ein Förderwerk für eine Füllmaschine und ein entsprechendes Verfahren bereitzustellen, die ermöglichen, dass auf zuverlässige Art und Weise Endprodukte mit geringem Gasanteil erzeugt werden können, die nicht kontaminiert werden, wobei gleichzeitig eine hohe Portionsgenauigkeit und eine Schonung der Vakuumpumpe realisiert werden kann.

Erfindungsgemäß wird diese Aufgabe durch die Merkmale der Ansprüche 1, 9 und 14 gelöst.

Gemäß der vorliegenden Erfindung weist ein Förderwerk für eine Füllmaschine zum Fördern von pastöser Masse, insbesondere von Wurstbrät, ein Gehäuse mit einer Vakuumöffnung auf. Ferner weist die Vorrichtung eine Vakuumpumpe auf, die über eine Saugleitung mit dem Inneren des Förderwerks verbunden ist, um einen Unterdruck im Förderwerk zu erzeugen. Unter Saugleitung ist der Bereich zwischen Vakuumpumpe bis einschließlich der Vakuumöffnung im Gehäuse des Förderwerks zu verstehen.

Erfindungsgemäß weist die Füllmaschine eine Ventileinrichtung auf, die in der Saugleitung angeordnet ist. Weiter ist mindestens ein Drucksensor vorgesehen zum Messen des Drucks in der Saugleitung und/oder im Förderwerk. Eine Regeleinrichtung regelt den Druck in dem Förderwerk bzw. der Saugleitung auf einen bestimmten Sollwert, wobei über die Ventileinrichtung der Querschnitt der Saugleitung in Abhängigkeit des vom Drucksensor gemessenen Drucks eingestellt wird. Der Druck im Saugbereich im Förderwerk entspricht dabei im Wesentlichen dem Druck in der Saugleitung. Vorteilhafterweise kann durch die Regelung des Drucks ohne Zuführung von Fremdluft, die Höhe des Vakuums auf der Saugseite des Förderwerks nie unter den Druck in der Saugleitung abfallen. Dadurch ist gewährleistet, dass keine Fremdluft ins Förderwerk strömen kann. Der Druck kann auf einen genauen und konstanten Wert eingestellt werden und führt somit zu einer gleichbleibenden Produktqualität mit konstantem Luftanteil. Die vorliegende Erfindung bewirkt auch eine gleichmäßigere Förderwerksbefüllung und damit konstantere Portionsgewichte am Auslauf der Füllmaschine. Das Füllmedium wird nicht mit Fremdluft kontaminiert. Die Vakuumpumpe muss nie mehr Gas absaugen als der abzufüllenden Masse entzogen werden kann. Dies führt zu einer längeren Standzeit der Vakuumpumpe. Energie kann somit eingespart werden.

In besonders vorteilhafter Weise ist das Förderwerk eine Flügelzellenpumpe mit einem drehbar gelagerten Rotor, der radial verschiebbar gelagerte Flügel umfasst, die mit der Wandung des Gehäuses Förderzellen bilden. Die Flügelzellenpumpe weist einen Saugbereich, einen Druckbereich und einen Dichtbereich auf, wobei die Vakuumöffnung im Saugbereich insbesondere am Anfang des Saugbereichs oder im Dichtbereich angeordnet sein kann.

Es ist besonders vorteilhaft, wenn der Drucksensor in einem Bereich zwischen der Ventileinrichtung und der Vakuumöffnung angeordnet ist. Bei dieser Lösung kann der Drucksensor einfach in die Saugleitung oder in einer Stichleitung der Saugleitung auf einfache und kostengünstige Weise integriert werden, ohne dass bauliche Maßnahmen am Förderwerk notwendig sind. Der Drucksensor kann somit auch in bereits bestehende Förderwerke nachgerüstet werden.

Es ist auch möglich, dass der Drucksensor im Saugbereich des Förderwerks, insbesondere der Flügelzellenpumpe, angeordnet ist. Zwar ist das Anbringen des Drucksensors innerhalb des Förderwerks etwas aufwendiger, jedoch kann dann der Druck im Saugbereich sehr genau bestimmt werden.

Vorteilhafterweise umfasst die Ventileinrichtung ein geregeltes Proportionalventil, d.h. also ein Stellventil, dessen Öffnung proportional zum gemessenen Druck eingestellt werden kann.

Es ist besonders vorteilhaft, wenn parallel zum Proportionalventil ein Schaltventil zwischen Vakuumpumpe und Vakuumöffnung angeordnet ist. Somit können große Regelabweichungen schnell ausgeglichen werden, insbesondere am Anfang der Regelung. Andererseits kann dadurch auch ein möglichst kleines Regelventil ausgewählt werden, mit einem kleinen Regelbereich, was einerseits eine größere Regelgenauigkeit und andererseits geringere Kosten und einen geringeren Aufwand mit sich bringt.

Vorteilhafterweise ist in der Saugleitung ein Wasserabscheider angeordnet, insbesondere zwischen dem Proportionalventil und der Vakuumöffnung. Dies bringt den Vorteil mit sich, dass

Feuchtigkeit und zu fördernde Masse nicht in die Ventileinrichtung in der Saugleitung bzw. die Vakuumpumpe gelangen kann, was langfristig zu Schäden führen würde.

Gemäß dem erfindungsgemäßen Verfahren wird also der Druck in der Saugleitung und/oder in dem Förderwerk gemessen und der Druck durch Einstellen der Ventilöffnung in Abhängigkeit vom gemessenen Druck geregelt. Vorzugsweise führt die Regeleinrichtung dabei eine proportionale Regelung durch, wobei die Öffnung des Ventils proportional zum gemessenen Druck eingestellt wird. Um einen vorbestimmten Evakuierungsgrad bzw. eine gewünschte Luftmenge in der pastösen Masse zu erzielen wird ein entsprechender Sollwert bzw. Sollwertbereich für den Druck im Förderwerk und /oder der Saugleitung z.B. experimentell bestimmt und in der Regeleinrichtung abgespeichert. Dieser Sollwert bzw. Sollwertbereich dient dann zur Regelung.

Wenn der gemessene Druck einen Grenzwert überschreitet, d.h. bei einer zu großen Regelabweichung, kann zusätzlich ein zu dem Proportionalventil parallel geschaltetes Schaltventil geöffnet werden. Somit können Regelabweichungen schnell ausgeglichen werden. Dabei kann entweder ein bestimmter Grenzwert für die Regelabweichung festgelegt werden oder aber das Schaltventil wird am Anfang der Regelung für einen vorbestimmten Zeitabschnitt zusätzlich geöffnet.

Vorteilhafterweise kann die Vakuumpumpe mit einer im Wesentlichen konstanten Nennleistung betrieben werden, wobei der Druck im Förderwerk über die Ventileinrichtung eingestellt wird.

Vorteilhafterweise kann die Regeleinrichtung in die Maschinensteuerung der Füllmaschine integriert sein.

Die Erfindung wird nachfolgend unter Bezugnahme folgender Figuren näher erläutert.
- Fig. 1: zeigt perspektivisch eine Ausführungsform eines Förderwerks gemäß der vorliegenden Erfindung.
- Fig. 2: zeigt eine Draufsicht des in Fig. 1 gezeigten Förderwerks bei abgenommenem Deckel.
- Fig. 3: zeigt schematisch ein erstes Ausführungsbeispiel eines Förderwerks mit einem geregelten Proportionalventil in der Saugleitung.
- Fig. 4: zeigt grob schematisch ein zweites Ausführungsbeispiel eines Förderwerks mit einem geregelten Vakuumschieber.

- Fig. 5: zeigt grob schematisch einen Querschnitt einer weiteren mögliche Ausführungsform, bei der die Vakuumöffnung im Dichtbereich angeordnet ist.
- Fig. 6: zeigt schematisch eine Füllmaschine gemäß der vorliegenden Erfindung.

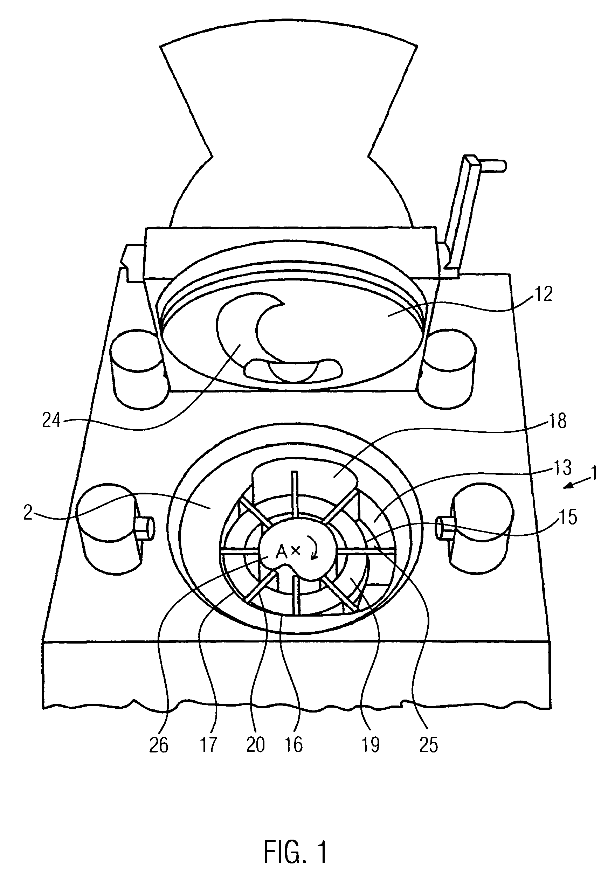

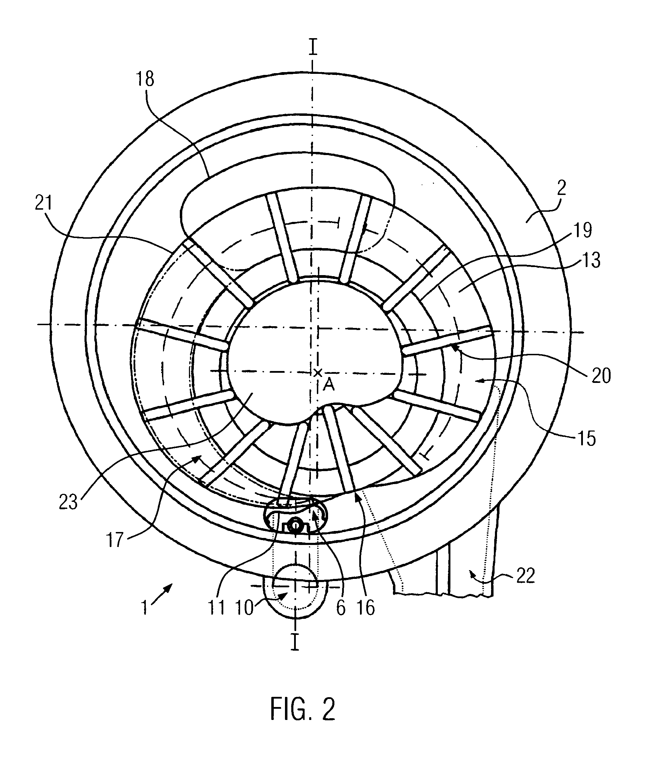

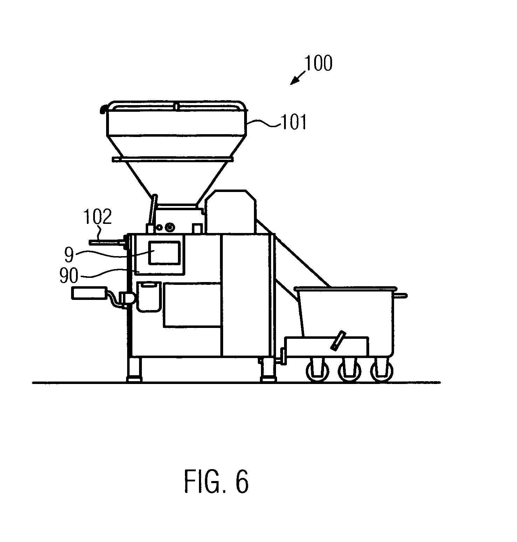

Fig. 1 zeigt den Aufbau einer Flügelzellenpumpe 1 gemäß der vorliegenden Erfindung in perspektivischer Darstellung und Fig.2 eine Draufsicht. Vorzugsweise handelt es sich bei der Füllmaschine um eine Maschine mit offenem Trichter bzw. um einen Trichter, in dem kein Vakuum erzeugt wird. Wie aus Fig. 1 und Fig. 2 hervorgeht, weist die Flügelzellenpumpe 1 zum Fördern von pastösen Massen, insbesondere von Wurstbrät, ein Gehäuse 2 auf sowie einen Einlass 18 für die pastöse Masse und einen Auslass 22 (siehe Fig. 2) für die portionierte Masse. Der Einlass 18 ist beispielsweise mit dem Auslass eines Trichters 101 (siehe Fig. 6) verbunden, über den die pastöse Masse der Flügelzellenpumpe 1 zugeführt wird. Der Auslass 22 ist beispielsweise mit einem Füllrohr 102 (siehe Fig. 6) verbunden. Über das Füllrohr 102 wird dann die portionierte pastöse Masse in bekannter Weise in die auf dem Füllrohr geraffte Wursthülle geschoben oder mit einer coextrudierten Wursthülle überzogen. Die Flügelzellenpumpe 1 weist in dem Pumpengehäuse 2 einen vorzugsweise exzentrisch angeordneten, in Drehung versetzbaren Rotor 19 auf, der über eine Pumpenwelle um die Achse A angetrieben wird. Die Mittelachse A ist exzentrisch im Gehäuse 2 angeordnet.

Der Rotor 19 weist radial verschiebbar gelagerte Flügel 20 auf, die mit der Wandung 21 des Pumpengehäuses 2, dem Boden 25 des Gehäuses 2 sowie der Seitenscheibe bzw. dem Deckel 12 des Pumpengehäuses 2 Förderzellen 13 bilden. Der Rotor 19 ist exzentrisch um einen feststehenden Spannexzenter 26 gelagert. Durch Drehung des Rotors bzw. der Flügel 20 kann in bekannter Weise pastöse Masse in den Förderzellen 13 vom Einlass 18 zum Auslass 22 gefördert werden.

Die Flügelzellenpumpe lässt sich allgemein in mehrere Bereiche einteilen. Einer dieser Bereiche ist der Saugbereich 17, ein weiterer ist der Druckbereich 15, wobei ein Dichtbereich 16 den Druckbereich 15 vom Saugbereich 17 trennt. Der Druckbereich 15 beginnt in Drehrichtung nach dem Einlass 18 und verläuft bis zum Auslass 22. Nach dem Druckbereich 15, der in Drehrichtung des Rotors 19 nach dem Auslass 22 endet, schließt sich der Dichtbereich 16 an, welcher den Druckbereich vom Saugbereich trennt. Nach dem Dichtbereich 16 ist der Saugbereich 17 angeordnet, der z.B. an einer Stelle beginnt, an der der spaltartige Abstand zwischen Rotor 19 und der Innenwand 21 des Gehäuses 2 zunimmt, derart, dass sich die Förderzellen 13 wieder vergrößern. Der Saugbereich 17 verläuft bis zum Ende des Einlasses 18. Im Saugbereich herrschen Drücke von 0,005 bis 1 bar. Wie in der Fig. 1 gezeigt ist, kann der Deckel bzw. die Seitenscheibe 12 auf der dem Förderwerksinnenraum zugewandten Seite eine vertiefte Nutfläche bzw. Aussparung 24 im oberen Bereich des Saugbereichs aufweisen. Die Nutfläche 24 überdeckt bei geschlossenem Deckel die Flügelzellen 13 im Saugbereich 17 und bildet dabei einen Spalt zwischen Deckelunterseite und der Flügeloberseite, dessen Größe im Wesentlichen der Nuttiefe entspricht. Während zwischen dem Bräteinlass 18 und dem Brätauslass 22 gelegene Flügelzelle 13 im Wesentlichen abgedichtet sind, wird durch den Spalt 24 zwischen den einzelnen Flügelzellen 13 eine Verbindung zur Erzeugung eines Unterdruck gebildet.

Alternativ kann diese Nut 24 im Saugbereich auch im Boden 25 oder in der Gehäusewand 21 angeordnet sein.

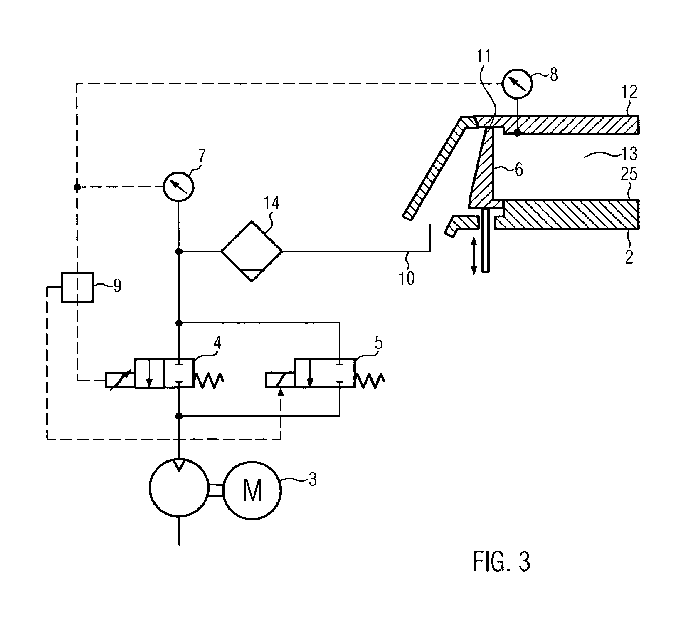

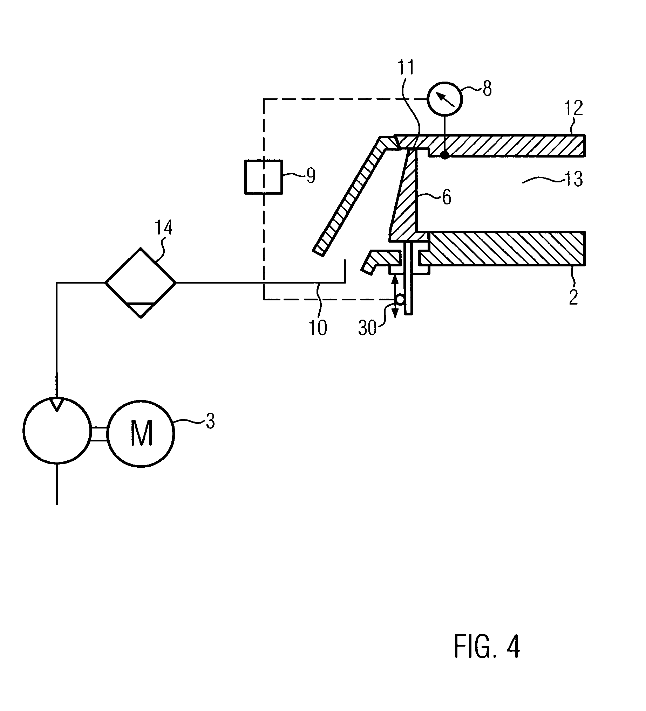

Wie insbesondere aus Fig. 3 und 4 zu erkennen ist, weist dazu das Gehäuse 2 am Anfang des Saugbereichs 17 seitlich in der Gehäusewandung eine in das Innere einer Flügelzelle 13 mündende Vakuumöffnung 11 auf, die über eine Saugleitung 10 mit einer Vakuumpumpe 3 verbunden ist. Fig. 4 und 3 sind eine grob schematische Darstellung eines Abschnitts des Förderwerks und entsprechen im Wesentlichen einem Teilschnitt entlang der Linie I-I in Fig. 2. Der Einfachheit halber wurde hier nur der Beginn der Saugleitung 10 in Form der Vakuumöffnung 11 detailliert gezeichnet, wobei die weitere Saugleitung 10 nur als Linie dargestellt ist.

Unter Saugleitung ist hier der Bereich zwischen der Vakuumpumpe 3 bis einschließlich der Vakuumöffnung 11 zu verstehen. Durch das Erzeugen eines Unterdrucks in den Flügelzellen 13 im Saugbereich wird das Einziehen des Bräts vom Trichterinneren in die Flügelzellen im Einlass 18 unterstützt. Weiter kann dem Füllgut eine bestimmte Menge an Luft entzogen werden. Bei dem in Fig. 3 gezeigten Ausführungsbeispiel kann die Vakuumöffnung 11 mit Hilfe eines Vakuumschiebers 6 ganz verschlossen werden und zumindest teilweise geöffnet werden, wie durch den Pfeil in Fig. 3 verdeutlicht wird. In Fig. 3 befindet sich der Vakuumschieber 6 in einer oberen Verschlussposition. Die Vakuumöffnung hat z.B. einen quadratischen Querschnitt. Der Schieber 6 ist z.B. so im bzw. am Gehäuse 2 angeordnet, dass seine zum Innenraum des Förderwerks gerichtete Fläche vorzugsweise im Wesentlichen bündig zur seitlichen Gehäuseinnenwand 21 verläuft, derart, dass die Flügel 20 an dem Schieber vorbeigleiten können.

Gemäß dem in Fig. 3 gezeigten ersten Ausführungsbeispiel der vorliegenden Erfindung umfasst hier die Ventileinrichtung zwischen der Vakuumpumpe 3 und der Vakuumöffnung 11 ein geregeltes Proportionalventil 4. Ferner ist in der Saugleitung 10 ein Wasserabscheider 14 angeordnet, um Feuchtigkeit der abgepumpten Luft und pastöse Masse abzuscheiden. Weiter umfasst das Ausführungsbeispiel einen Drucksensor 7, der den Druck in der Saugleitung 10 misst. Der Drucksensor 7 kann dabei entweder direkt in der Saugleitung 10 angeordnet sein oder aber, wie in Fig. 3 dargestellt, in einer Stichleitung. Zusätzlich weist dieses Ausführungsbeispiel eine Regeleinrichtung 9 auf. Die Messsignale des Vakuumsensors 7 werden zu der Regeleinrichtung 9 weitergeleitet. Die Regeleinrichtung 9 regelt den Druck in der Saugleitung 10 bzw. den entsprechenden Druck in den Förderwerkskammern 13 im Saugbereich. Das Stellglied dieser Regelung ist das Proportionalventil 4, dessen Öffnung proportional zu dem gemessenen Druck eingestellt wird. Somit wird über das Ventil der Querschnitt und damit der Durchlass in der Saugleitung zum Förderwerk eingestellt. Wird nun beispielsweise ein Produkt hergestellt, bei dem nur ein Teil oder kein Luftanteil entzogen werden soll, so kann der Druck im Saugbereich des Förderwerk, d.h. in den Förderzellen 13, über das Proportionalventil 4 geregelt werden. Zusätzlich zu dem Proportionalventil 4 kann ein Schaltventil 5 parallel geschaltet werden. Das Schaltventil 5 kann über eine Zweipunktregelung geöffnet oder geschlossen werden. Damit können große Regelabweichungen schnell ausgeglichen werden. Dies ist insbesondere am Anfang der Regelung vorteilhaft. Nimmt die Regelabweichung ab, so wird das Schaltventil 5 wieder geschlossen.

Zusätzlich oder alternativ zum Drucksensor 7 kann der Drucksensor 8 vorgesehen sein, der den Druck im Förderwerk im Saugbereich misst. Die Messwerte des Drucksensors 8 werden ebenfalls an die Regeleinrichtung 9 geleitet, wobei dann ein Regelsignal in Abhängigkeit des Messsignals des Drucksensors 8 und/oder 7 erzeugt wird, um die Ventileinrichtung 4, 5 anzusteuern. Die Regeleinrichtung 9 führt einen Soll-Istwertvergleich durch und erzeugt ein entsprechendes Regelsignal für die Ventile 4, 5. In der Regel ist ein Drucksensor ausreichend. Werden zwei Drücke gemessen, so kann beispielsweise der Mittelwert als Istwert herangezogen werden. Es ist aber auch möglich, dass es zwei Regelschleifen gibt, wobei die beiden Druckmesswerte jeweils mit entsprechenden Sollwerten verglichen werden.

Die Regeleinrichtung 9 kann entweder separat aufgebaut sein, kann jedoch auch in die Maschinensteuerung 90 integriert sein (Fig. 6).

Fig. 4 zeigt ein weiteres Ausführungsbeispiel, bei dem die Ventileinrichtung den Vakuumschieber 6 umfasst. Hier dient der Vakuumschieber also nicht nur zum Öffnen und Verschließen, sondern zum Einstellen des Saugleitungsquerschnitts. Bei diesem Ausführungsbeispiel ist der Drucksensor 8 derart angeordnet, dass er den Druck im Förderwerk 1, hier innerhalb der Förderzelle 13, im Saugbereich misst. Die Messwerte des Drucksensors 8 werden zu der Regeleinrichtung 9 weitergeleitet, die aufgrund eines Soll-Istwert-Vergleichs ein Regelsignal an das Stellglied, hier den Vakuumschieber 6, leitet, wobei der Vakuumschieber beispielsweise über einen Stellmotor 30 in Pfeilrichtung auf und ab bewegt wird, derart, dass sich der Querschnitt der Saugleitung 10 in Abhängigkeit des gemessenen Drucks ändert. Ansonsten entspricht das in Fig. 4 gezeigte Ausführungsbeispiel im Wesentlichen dem in Fig. 3 gezeigten Ausführungsbeispiel.

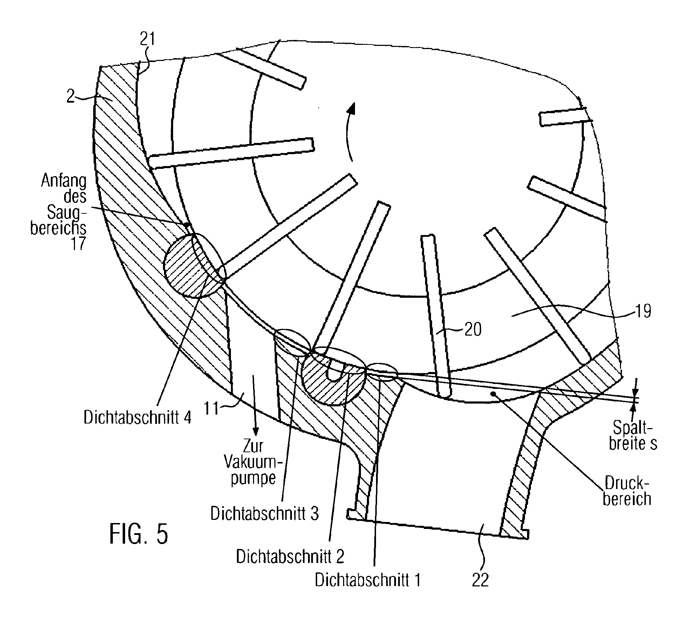

Fig. 5 zeigt eine weitere mögliche Ausführungsform, die den vorherigen Ausführungsbeispielen entspricht, bei der die Vakuumöffnung nicht im Saugbereich angeordnet ist, sondern im Dichtbereich zwischen zwei Dichtelementen zum Abdichten eines Spalts zwischen Rotor und Wandung des Pumpengehäuses. Bei dieser Ausführungsform reicht dann z.B. die Nut 24 bis in den Dichtbereich. Der genaue Aufbau eines entsprechenden Dichtbereichs ist z.B. in der Patentschrift EP 1 837 524 B1 näher erläutert.

Nachfolgend wird das erfindungsgemäße Verfahren näher erläutert.

Zunächst wird ein Sollwert oder Sollwertbereich für den Druck im Förderwerk 1, d.h. in den Förderzellen 13 im Saugbereich 17 und/oder für den Druck in der Saugleitung festgelegt und in die Regeleinrichtung 9 eingegeben. Ein entsprechender Wert kann beispielsweise experimentell bestimmt werden, indem mit Hilfe der Ventileinrichtung 4, 5 oder 6 unterschiedliche Unterdrücke eingestellt werden und dann überprüft wird, bei welchem Druck oder in welchem Druckbereich (gemessen im Förderwerk und / oder in der Saugleitung) das fertige Produkt eine gewünschte Konsistenz bzw. einen gewünschten Luftanteil aufweist.

Über den Trichter 101 wird dem Förderwerk pastöse Masse zugeführt. Zum Einstellen des vorgegebenen Unterdrucks innerhalb des Förderwerks im Saugbereich 17 wird der in Fig. 3 gezeigte Vakuumschieber 6 in seine offene Position verfahren, so dass zumindest ein Teil der Vakuumöffnung 11 freigelegt wird. Darüber hinaus läuft die Vakuumpumpe 3. Über den mindestens einen Drucksensor, z.B. den Drucksensor 7, wird der Druck in der Saugleitung 10 gemessen. Alternativ oder zusätzlich kann der Druck über den Drucksensor 8 in dem Förderwerk gemessen werden. Die Messwerte werden zu der Regeleinrichtung 9 geleitet, die einen Soll-IstWert-Vergleich durchführt und auf der Grundlage dieses Vergleichs ein Regelsignal, das proportional zum Messwert ist, an das Proportionalventil 4 sendet, das am Anfang des Regelvorgangs ganz geöffnet ist. In der Regeleinrichtung wird weiter überprüft, ob die Regelabweichung groß ist, d.h. ob der gemessene Druck einen Grenzwert überschreitet. Wenn dies so ist, wird zusätzlich das parallel geschaltete Schaltventil 5 geöffnet. Unterschreitet der gemessene Druck diesen Grenzwert, wird das Schaltventil 5 wieder geschlossen. Das Schaltventil 5 unterliegt einer Zweipunktregelung. Es ist alternativ auch möglich, dass am Anfang der Regelung über einen vorbestimmten Zeitraum zusätzlich das Schaltventil 5 geöffnet wird.

Auf diese Weise kann ein vorbestimmter konstanter Druck im Förderwerk 1 eingestellt werden.

Alternativ zu dem vorab beschriebenen Verfahren kann die Ventileinrichtung auch durch den Vakuumschieber 6 (Fig. 4) gebildet werden, dessen Stellung dann proportional zum (über den Drucksensor 8) gemessenen Druck eingestellt wird, so dass der Durchlass in der Saugleitung zum Förderwerkinneren geregelt wird.

Die Drücke innerhalb des Saugbereichs liegen bei Produkten, denen nur ein geringer Luftanteil oder kaum Luftanteil entzogen werden soll, in einem Bereich von 200 bis 800 mbar. Bei Produkten, denen ein großer Luftanteil entzogen werden soll, können die Drücke in den Förderzellen 13 in einem Bereich von 5 bis 200 mbar liegen. Der Druck im Trichter liegt vorzugsweise bei Normaldruck bzw. Außendruck.

Somit ist das Förderwerk und die entsprechende Füllmaschine sowohl zur Herstellung von kompakten und porenfreien Endprodukten, als auch zum Herstellen von Produkten mit größerem Luftanteil geeignet. Dabei ist gewährleistet, dass keine Fremdluft ins Förderwerk strömen kann. Dies verhindert eine Kontamination mit Fremdluft und bringt darüber hinaus eine hohe Portionsgenauigkeit mit sich. Darüber hinaus wird die Vakuumpumpe geschont. Der Luftanteil kann sehr exakt eingestellt werden.

## Patentansprüche

1. Förderwerk (1) für eine Füllmaschine (100) zum Fördern von pastöser Masse, insbesondere Wurstbrät, mit
einem Gehäuse (2) mit einer Vakuumöffnung (11) und mit
einer Vakuumpumpe sowie einer Saugleitung (10) zum Erzeugen eines Unterdrucks in dem Förderwerk (1),
eine Ventileinrichtung (4, 5, 6) in der Saugleitung (10),
**gekennzeichnet durch**
mindestens einen Drucksensor (7, 8) zum Messen des Drucks in der Saugleitung (10) und/oder im Förderwerk (1) und **durch**
eine Regeleinrichtung (9) zum Regeln des Unterdrucks in dem Förderwerk (1) und/oder der Saugleitung (10), wobei über die Ventileinrichtung (4, 5, 6) der Querschnitt der Saugleitung (10) in Abhängigkeit des von dem mindestens einen Drucksensor (7, 8) gemessenen Drucks einstellbar ist.

2. Förderwerk (1) nach Anspruch 1, **dadurch gekennzeichnet, dass** das Förderwerk (1) eine Flügelzellenpumpe (1) ist und einen drehbar gelagerten Rotor (19) mit radial verschiebbaren Flügeln (20) umfasst, die mit der Wandung (21) des Gehäuses (2) Förderzellen (13) bilden, wobei die Flügelzellenpumpe einen Saugbereich (17), einen Druckbereich (15) und einen Dichtbereich (16), der den Druckbereich (15) vom Saugbereich (17) trennt, aufweist, und
wobei die Vakuumöffnung (11) im Saugbereich (17), insbesondere am Anfang des Saugbereichs (17), oder im Dichtbereich (16) angeordnet ist.

3. Förderwerk nach Anspruch 1 oder 2, **dadurch gekennzeichnet, dass** der Drucksensor (7) zwischen der Ventileinrichtung (4, 5, 6) und der Vakuumöffnung (11) angeordnet ist.

4. Förderwerk nach mindestens einem der vorhergehenden Ansprüche, **dadurch gekennzeichnet, dass** der Drucksensor (8) im Förderwerk (1) im Saugbereich (17) angeordnet ist.

5. Förderwerk nach mindestens einem der Ansprüche 1 bis 4, **dadurch gekennzeichnet, dass** die Ventileinrichtung (4, 5, 6) ein Proportionalventil umfasst.

6. Förderwerk nach mindestens Anspruch 5, **dadurch gekennzeichnet, dass** parallel zum Proportionalventil (4) ein Schaltventil (5) zwischen Vakuumpumpe (3) und Vakuumöffnung (11) angeordnet ist.

7. Förderwerk nach mindestens einem der Ansprüche 1 bis 6, **dadurch gekennzeichnet, dass** die Ventileinrichtung (4, 5, 6) einen Vakuumschieber (6) umfasst, der in der Saugleitung (10), insbesondere zum Verschließen der Vakuumöffnung, angeordnet und dessen Stellung proportional zum gemessenen Druck einstellbar ist.

8. Förderwerk nach mindestens einem der Ansprüche 1 bis 7, **dadurch gekennzeichnet, dass** in der Saugleitung (10) ein Wasserabscheider (14) angeordnet ist, insbesondere zwischen dem Proportionalventil (4) und der Vakuumöffnung (11).

9. Verfahren zum Fördern von pastöser Masse mit einem Förderwerk nach mindestens Anspruch 1 mit den folgenden Schritten:
- Messen des Drucks in der Saugleitung (10) und/oder in dem Förderwerk (1) und
- Regeln des Drucks durch Einstellen der Ventilöffnung in Abhängigkeit vom gemessenen Druck.

10. Verfahren nach Anspruch 9, **dadurch gekennzeichnet, dass** die Regeleinrichtung (9) eine Proportionalregelung durchführt, wobei die Öffnung des Ventils (4, 6) proportional zum gemessenen Druck eingestellt wird.

11. Verfahren nach Anspruch 9 oder 10, **dadurch gekennzeichnet, dass** ein Sollwert oder Sollwertbereich für den Druck im Förderwerk (1), insbesondere im Saugbereich des Förderwerks, und /oder für den Druck in der Saugleitung (10) festgelegt und in der Regeleinrichtung (9) gespeichert wird.

12. Verfahren nach mindestens einem der Ansprüche 9 bis 11, **dadurch gekennzeichnet, dass** bei großer Regelabweichung, insbesondere wenn der gemessene Druck einen Grenzwert überschreitet, ein zusätzlich zu einem Proportionalventil (4) parallel geschaltetes Schaltventil (5) geöffnet wird.

13. Verfahren nach mindestens einem der Ansprüche 9 bis 12, **dadurch gekennzeichnet, dass** die Vakuumpumpe (3) mit einer im Wesentlichen konstanten Leistung betrieben wird.

14. Füllmaschine zum Befüllen von Wursthülle mit pastöser Masse, insbesondere Wurstbrät, wobei die Füllmaschine ein Förderwerk nach mindestens einem der Ansprüche 1 bis 8 umfasst.

15. Füllmaschine nach Anspruch 14, **dadurch gekennzeichnet, dass** die Regeleinrichtung (9) in eine Maschinensteuerung (90) der Füllmaschine integriert ist.

## Claims

1. Conveyor system (1) for a filling machine (100) for conveying pasty mass, in particular sausage meat, comprising
a housing (2) with a vacuum opening (11), and comprising
a vacuum pump and a suction line (10) for generating a vacuum in the conveyor system (1),
a valve means (4, 5, 6) in the suction line (10),
**characterized by**
at least one pressure sensor (7, 8) for measuring the pressure in the suction line (10) and/or in the conveyor system (1), and by
a control means (9) for controlling the vacuum in the conveyor system (1) and/or the suction line (10), wherein the cross-section of the suction line (10) can be adjusted in response to the pressure measured by the at least one pressure sensor (7, 8) via the valve means (4, 5, 6).

2. Conveyor system (1) according to claim 1, **characterized in that** the conveyor system (1) is a vane pump (1) and comprises a rotatably mounted rotor (19) with radially movable vanes (20) which form conveyor cells (13) together with the walls (21) of the housing (2), wherein the vane pump comprises a suction region (17), a pressure region (15) and a sealing region (16) which separates the pressure region (15) from the suction region (17), and
wherein the vacuum opening (11) is arranged in the suction region (17), in particular at the beginning of the suction region (17), or in the sealing region (16).

3. Conveyor system according to claim 1 or 2, **characterized in that** the pressure sensor (7) is arranged between the valve means (4, 5, 6) and the vacuum opening (11).

4. Conveyor system according to at least one of the preceding claims, **characterized in that** the pressure sensor (8) is arranged in the conveyor system (1) in the suction region (17).

5. Conveyor system according to at least one of claims 1 to 4, **characterized in that** the valve means (4, 5, 6) comprises a proportional valve.

6. Conveyor system according to at least claim 5, **characterized in that** an on-off valve (5) is arranged in parallel to the proportional valve (4) between the vacuum pump (3) and the vacuum opening (11).

7. Conveyor system according to at least one of claims 1 to 6, **characterized in that** the valve means (4, 5, 6) comprises a vacuum slider (6) which is arranged in the suction line (10), in particular for closing the vacuum opening, and whose position can be adjusted proportionally to the measured pressure.

8. Conveyor system according to at least one of claims 1 to 7, **characterized in that** a water separator (14) is arranged in the suction line (10), in particular between the proportional valve (4) and the vacuum opening (11).

9. Method of conveying pasty mass with a conveyor system according to at least claim 1, comprising the following steps:
- measuring the pressure in the suction line (10) and/or in the conveyor system (1), and
- controlling the pressure by adjusting the valve opening in response to the measured pressure.

10. Method according to claim 9, **characterized in that** the control means (9) carries out a proportional control, the opening of the valve (4, 6) being adjusted proportionally to the measured pressure.

11. Method according to claim 9 or 10, **characterized in that** a reference value or a reference value range for the pressure in the conveyor system (1), in particular in the suction region of the conveyor system, and/or for the pressure in the suction line (10) is determined and stored in the control means (9).

12. Method according to at least one of claims 9 to 11, **characterized in that** in case of a major control deviation, in particular if the measured pressure exceeds a limiting value, an on-off valve (5) connected in parallel in addition to a proportional valve (4) is opened.

13. Method according to at least one of claims 9 to 12, **characterized in that** the vacuum pump (3) is operated at an essentially constant power.

14. Filling machine for filling sausage casing with pasty mass, in particular sausage meat, wherein the filling machine comprises a conveyor system according to at least one of claims 1 to 8.

15. Filling machine according to claim 14, **characterized in that** the control means (9) is integrated in a machine control (90) of the filling machine.

## Revendications

1. Convoyeur d'alimentation (1) pour une machine de remplissage (100) destiné à alimenter une masse pâteuse, en particulier de la chair à saucisse, comportant
un boîtier (2) avec un orifice d'aspiration sous vide (11),
une pompe à vide ainsi qu'une conduite d'aspiration (10) pour produire une sous-pression dans le convoyeur d'alimentation (1), et
un dispositif à vanne (4, 5, 6) dans la conduite d'aspiration (10),
**caractérisé par**
au moins un capteur de pression (7, 8) pour mesurer la pression dans la conduite d'aspiration (10) et/ou dans le convoyeur d'alimentation (1), et par
un dispositif de régulation (9) pour réguler la sous-pression dans le convoyeur d'alimentation (1) et/ou dans la conduite d'aspiration (10), dans lequel la section de la conduite d'aspiration (10) peut être ajustée par le dispositif à vanne (4, 5, 6) en fonction de la pression mesurée par l'au moins un capteur de pression (7, 8).

2. Convoyeur d'alimentation (1) selon la revendication 1, **caractérisé en ce que** le convoyeur d'alimentation (1) est une pompe à palettes (1) et comporte un rotor à paliers de rotation (19) avec des ailettes (20) déplaçables radialement qui constituent avec la paroi (21) du boîtier (2) des cellules d'alimentation (13), dans lequel la pompe à palettes comporte une zone d'aspiration (17), une zone de compression (15) et une zone d'étanchéité (16) qui sépare la zone de compression (15) de la zone d'aspiration (17), et
dans lequel l'orifice d'aspiration sous vide (11) est agencé dans la zone d'aspiration (17), en particulier au début de la zone d'aspiration (17), ou dans la zone d'étanchéité (16).

3. Convoyeur d'alimentation (1) selon la revendication 1 ou 2, **caractérisé en ce que** le capteur de pression (7) est agencé entre le dispositif à vanne (4, 5, 6) et l'orifice d'aspiration sous vide (11).

4. Convoyeur d'alimentation selon au moins l'une des revendications précédentes, **caractérisé en ce que** le capteur de pression (8) est agencé dans le convoyeur d'alimentation (1) dans la zone d'aspiration (17).

5. Convoyeur d'alimentation selon au moins l'une des revendications 1 à 4, **caractérisé en ce que** le dispositif à vanne (4, 5, 6) comporte une vanne proportionnelle.

6. Convoyeur d'alimentation selon au moins la revendication 5, **caractérisé en ce qu'**une vanne de commande (5) est agencée parallèlement à la vanne proportionnelle (4), entre la pompe à vide (3) et l'orifice d'aspiration sous vide (11).

7. Convoyeur d'alimentation selon au moins l'une des revendications 1 à 6, **caractérisé en ce que** le dispositif à vanne (4, 5, 6) comporte un tiroir à vide (6) qui est agencé dans la conduite d'aspiration (10), en particulier pour obturer l'orifice d'aspiration sous vide, et dont la position peut être ajustée proportionnellement à la pression mesurée.

8. Convoyeur d'alimentation selon au moins l'une des revendications 1 à 7, **caractérisé en ce qu'**un séparateur d'eau (14) est agencé dans la conduite d'aspiration (10), en particulier entre la vanne proportionnelle (4) et l'orifice d'aspiration sous vide (11).

9. Procédé d'alimentation d'une masse pâteuse avec un convoyeur d'alimentation selon au moins la revendication 1, comprenant les étapes suivantes :
- mesure de la pression dans la conduite d'aspiration (10) et/ou dans le convoyeur d'alimentation (1), et
- réglage de la pression par ajustement de l'ouverture de vanne en fonction de la pression mesurée.

10. Procédé selon la revendication 9, **caractérisé en ce que** le dispositif de régulation (9) met en oeuvre une régulation proportionnelle, dans lequel l'ouverture de la vanne (4, 6) est ajustée de manière proportionnelle à la pression mesurée.

11. Procédé selon la revendication 9 ou 10, **caractérisé en ce qu'**une valeur de consigne ou une plage de valeurs de consigne est définie pour la pression dans le convoyeur d'alimentation (1), en particulier dans la zone d'aspiration du convoyeur d'alimentation, et/ou pour la pression dans la conduite d'aspiration (10), et enregistrée dans le dispositif de régulation (9).

12. Procédé selon au moins l'une des revendications 9 à 11, **caractérisé en ce qu'**une vanne de commande (5) branchée en parallèle en plus d'une vanne proportionnelle (4) est ouverte lors d'une déviation importante, en particulier lorsque la pression mesurée dépasse une valeur seuil.

13. Procédé selon au moins l'une des revendications 9 à 12, **caractérisé en ce que** la pompe à vide (3) est actionnée avec une puissance essentiellement constante.

14. Machine de remplissage pour le remplissage de boyaux à saucisse avec une masse pâteuse, en particulier de la chair à saucisse, dans laquelle la machine de remplissage comporte un convoyeur d'alimentation selon au moins l'une des revendications 1 à 8.

15. Machine de remplissage selon la revendication 14, **caractérisée en ce que** le dispositif de régulation (9) est intégré dans une commande de machine (90) de la machine de remplissage.
